# EUROPÄISCHE PATENTANMELDUNG

(11) **EP 0 916 825 A2**
(43) Veröffentlichungstag der Anmeldung: **19.05.1999**
(21) Anmeldenummer: 98119092.9
(22) Anmeldetag: 09.10.1998
(51) Int. Cl.: F02C 1/00, F01D 15/10

(54) **Verfahren und Vorrichtung zur Nutzung von Abwärme aus Abgasen**

(30) Priorität: 14.11.1997 AT 1937/97
(71) Anmelder: VOEST-ALPINE INDUSTRIEANLAGENBAU GESELLSCHAFT m.b.H., A-4031 Linz (AT)
(72) Erfinder: Lehner, Johann, 4020 Linz (AT); Purkarthofer, Karl, 8181 St. Ruprecht/R. (AT); Halozan, Hermann, 8010 Graz (AT); Jericha, Herbert, 1080 Wien (AT)
(74) Vertreter: Rieberer, Stefan, Dipl.-Ing.

(57) **Zusammenfassung**

Ein Verfahren und eine Vorrichtung zur Nutzung von Wärme aus Abgasen metallurgischer Prozesse, beispielsweise aus Abgasen eines Elektrolichtbogenofens, wobei der Abgasstrom im wesentlichen bei Umgebungsdruck einer inversen Gasturbine, die mit einem Generator zur Erzeugung elektrischer Energie gekoppelt ist, zugeführt, in dieser Gasturbine auf einen geringeren Druck expandiert, danach abgekühlt und in einem Verdichter komprimiert wird, und wobei die in der Gasturbine frei werdende Arbeit einerseits für den Antrieb des Verdichters, andererseits zur Erzeugung elektrischer Energie durch den Generator genutzt wird. Gegebenenfalls kann die durch Kühlung ausgekoppelte Wärme für Vorwärmzwecke und Fernwärme genutzt werden.

## Beschreibung

Die vorliegende Erfindung bezieht sich auf ein Verfahren und eine Vorrichtung zur Nutzung von Wärme aus Abgasen metallurgischer Prozesse, insbesondere aus Abgasen eines Elektrolichtbogenofens.

Bei metallurgischen Prozessen, z.B. bei der Stahlerzeugung, werden in den Primäraggregaten, z.B. ein LD-Konverter oder ein Elektrolichtbogenofen, große Energiemengen durch Primärabgase abgeführt. In nachgeschalteten umwelttechnischen Anlagen werden die erforderliche Reinigung und Kühlung der Abgase durchgeführt. Zu deren kontrollierten Behandlung werden Abgase vorerst nachverbrannt und mit einer vorbestimmten Temperatur und bei einem vorgegebenen Volumenstrom den entsprechenden nachgeschalteten Anlagen zugeführt. Der Energieinhalt dieser Abgase, welcher bis zu 90 MW betragen kann, wird jedoch nicht genutzt, sondern durch Kühlung an die Umwelt abgegeben.

Daher ist es ein Ziel der vorliegenden Erfindung, eine Möglichkeit zur Nutzung der Wärme aus Abgasen solcher Anlagen zu schaffen. Die Maßnahmen zur Nutzung sollten jedoch einen geringen zusätzlichen Aufwand verursachen, sodaß deren Einsatz mit geringen Kosten verbunden und demnach eine rasche Amortisation möglich ist.

Die obigen Aufgaben werden ausgehend von einem Verfahren der eingangs genannten Art dadurch gelöst, daß die heißen Abgase im wesentlichen bei Umgebungsdruck einer inversen Gasturbine zugeführt, in dieser auf einen geringeren Druck expandiert, abgekühlt und nachfolgend in einem Verdichter komprimiert werden, wobei die inverse Gasturbine mit einem Generator zur Erzeugung elektrischer Energie gekoppelt ist. Eine erfindungsgemäße Anlage zur Lösung der zugrunde gelegten Aufgaben ist demnach dadurch gekennzeichnet, daß sie eine inverse Gasturbine, die mit einem Generator zur Erzeugung elektrischer Energie gekoppelt ist, eine nachgeordnete Einrichtung zum Abkühlen und eine dieser nachgeordnete Einrichtung zum Verdichten der Abgase aufweist.

Im Gegensatz zu herkömmlichen Gasturbinen, bei welchen die Brennstoffzufuhr auf einem höheren Druckniveau als Umgebungsdruck erfolgt, findet im inversen Gasturbinenprozeß die Wärmezufuhr bei Umgebungsdruck statt. In der Turbine erfolgt die Expansion der Gase auf Unterdruck. Nach einer Abkühlung und gegebenenfalls Reinigung werden die Abgase wieder auf Umgebungsdruck verdichtet und an die Umgebung abgegeben. Die an der Turbine frei werdende Arbeit wird zum Antrieb des Verdichters und zur Gewinnung elektrischer Energie im Generator umgesetzt. Ein Vorteil der inversen Gasturbine liegt unter anderem darin, daß durch Turbine und Verdichter ein erhöhter Volumenstrom geführt werden kann, wodurch sich vor allem bei kleineren Leistungen eine verbesserte Strömungssituation und ein höherer Wirkungsgrad ergibt. Bei der erfindungsgemäßen Anwendung mit heißen, auf Umgebungsdruck befindlichen Abgasen ist die Anwendung der inversen Gastrubine besonders vorteilhaft, da diese Abgase aufgrund ihrer hohen Temperatur vor Einströmen in die Turbine nicht oder nur mit großem Aufwand verdichtet werden können. Die Investitionskosten einer inversen Gasturbine mit einem Verdichter und Generator sind im Vergleich zu den derzeit benötigten umwelttechnischen Anlagen nur geringfügig höher, sodaß mit einer Amortisation innerhalb weniger Jahre zurechnen ist.

Beim Betrieb einer metallurgischen Anlage, z.B. eines Elektrolichtbogenofens entstehen, abhängig von dem Betriebszustand des Ofens, ein Abgasstrom mit stark unterschiedlichen Temperaturen und Strömungsgeschwindigkeiten Bei einer in der Praxis vorteilhaften Ausführungsform wird der Abgasstrom vor Zuführung in die inverse Gasturbine hinsichtlich Menge und Temperatur innerhalb eines zulässigen Bereichs konstant gehalten, da die Gasturbine mit einem im wesentlichen konstanten Volumenstrom und bei einer im wesentlichen konstanten Eingangstemperatur optimal betrieben werden kann. Vor der inversen Gasturbine ist demnach ein Mittel zur Vergleichmäßigung des Abgasstromes hinsichtlich seiner Menge und Temperatur vorgesehen. Hierfür kann beispielsweise zur Erhöhung der Temperatur eine Nachverbrennungskammer und zum Abkühlen eine Dampfeinspritzung oder alternativ einen Luftzuführung vorgesehen sein. Durch katalytische oder thermische Nachverbrennung kann bei Konstanthaltung der Temperatur zusätzlich eine Reduktion der gasförmigen Schadstoffkomponenten erzielt werden. Ein besonders vorteilhafter Betrieb der inversen Gasturbine ergibt sich, wenn der Abgasstrom mit einer Temperatur von ca. 700-900°C, insbesondere 750-850°C, zugeführt und in der inversen Gasturbine auf eine Temperatur von ca. 500-650°C abgekühlt werden, wobei der Abgasstrom der inversen Gasturbine unter Atmosphärendruck abzüglich der prozeßbedingten Druckverluste zugeführt und auf einen Druck von ca. 0,2-0,4 bar, expandiert werden.

Ein Vorteil der inversen Gasturbine liegt unter anderem aber auch darin, daß diese mit stark verunreinigten, z.B: staubbeladenen Abgasen betrieben werden kann. Zur Verbesserung der Lebensdauer und der Betriebssicherheit hat es sich als Vorteilhaft erwiesen, den Abgasstrom vor Zuführung in die inverse Gasturbine, bis auf eine maximal zulässige Staubbeladung von Grob- und Feinstaubanteilen, zu reinigen, z.B. durch ein oder mehrere Zyklone.

Der Wirkungsgrad des inversen Gasturbinenprozesses hängt wesentlich davon ab, daß der Abgasstrom nach Durchströmen der inversen Gastrubine in einem Wärmetauscher weiter abgekühlt wird. Dies kann durch einen nach der inversen Gasturbine angeordneten Wärmetauscher, insbesondere durch einen Verdampfer realisiert werden. Dabei wird der Abgasstrom nach Durchströmen der inversen Gasturbine in einem Wärmetauscher oder einem Einspritzkühler rasch auf eine Temperatur von ca. 50-250°C abgekühlt.

Eine vorteilhafte Variante zur Nutzung der in dem Wärmetauscher abgeführten Energie ergibt sich dadurch, daß durch den Wärmetauscher ein komprimiertes gasförmiges Medium, vorzugsweise Luft, geführt, dabei erwärmt und einer konventionellen Heißluft-Gasturbine zugeführt wird, in welcher das gasförmige Medium abgekühlt und im wesentlichen auf Umgebungsdruck expandiert wird, wobei hierfür der Wärmetauscher einerseits mit einem Verdichter und andererseits mit einer konventionellen Heißluft-Gasturbine verbunden ist, welche zur Erzeugung elektrischer Energie mit dem Generator verbunden ist. Dabei kann in vorteilhafter Weise vorgesehen sein, daß die Heißluft-Gasturbine und der Verdichter auf einer gemeinsamen Welle angeordnet und über ein Getriebe mit dem Generator verbunden sind.

Weiters kann bei der genannten Ausführungsvariante das expandierte abgekühlte gasförmige Medium, vorzugsweise Luft, als vorgewärmte Verbrennungsluft energetisch genutzt werden, wobei diese Energie dem Abgasstrom vor der inversen Gasturbine zugeführt wird. Zu diesem Zweck ist die konventionelle Heißluft-Gasturbine niederdruckseitig mit der Nachverbrennungskammer verbunden.

Nach Durchströmen des Wärmetauschers wird der gekühlte Abgasstrom in einem Verdichter auf Umgebungsdruck komprimiert und an die Umgebung abgegeben. Dabei hat es sich als vorteilhaft erwiesen, wenn der Verdichter mit der inversen Gasturbine über eine gemeinsame Welle gekoppelt ist. Ebenso ist die inverse Gasturbine über diese gemeinsame Welle mit dem Generator verbunden.

Die bestmögliche Reinigung des Abgasstromes erfolgt noch im gekühlten Zustand vor deren Verdichtung. Demnach hat es sich als vorteilhaft erwiesen, daß zwischen der Einrichtung zum Abkühlen und der Einrichtung zum Verdichten eine Einrichtung zum Entstauben des Abgasstromes, insbesondere ein Kondensator-Wäscher oder ein Trocken-Filter angeordnet ist. Alternativ dazu kann eine Einrichtung zum Entstauben des Abgasstromes aber auch nach der Einrichtung zum Verdichten angeordnet sein.

Bei der Verdichtung wird die Temperatur des Abgasstromes wiederum geringfügig erhöht. Demnach können der Abgasstrom nach deren Komprimierung durch den Verdichter zur Auskopplung von Restwärme durch einen weiteren Wärmetauscher geführt werden.

Weitere Vorteile und Merkmale der vorliegenden Erfindung ergeben sich aus der nachfolgenden Beschreibung nicht einschränkender Ausführungsbeispiele, wobei auf die beiliegenden Figuren Bezug genommen wird, die folgendes zeigen:
- Fig. 1: ein Blockschaltbild für ein Ausführungsbeispiel der erfindungsgemäßen Einrichtung anhand eines Elektrolichtbogenofens,
- Fig. 2: ein Blockschaltbild für eine alternative Ausführungsform der erfindungsgemäßen Einrichtung von Figur 1 und
- Fig. 3: ein Blockschaltbild für eine Variante der Ausführungsform gemäß Figur 2.

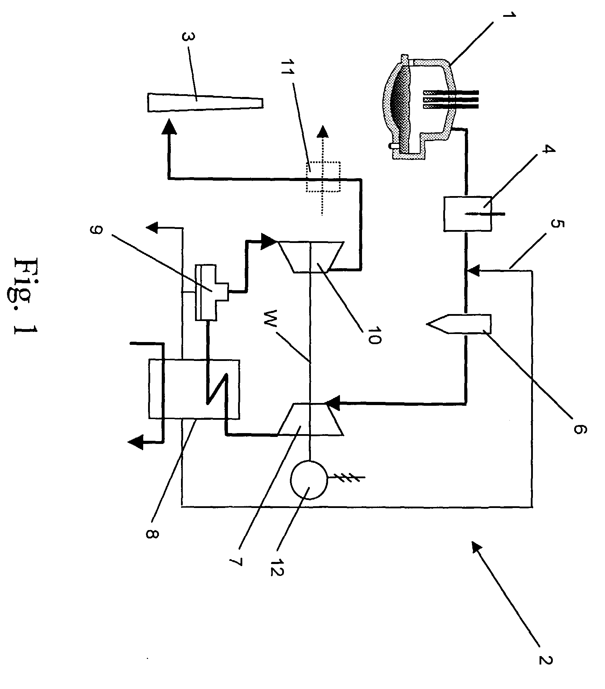

Vorerst wird auf Figur 1 Bezug genommen, in welcher schematisch ein Elektrolichtbogenofen 1 dargestellt ist, dessen heiße Abgase durch die erfindungsgemäße Vorrichtung 2 geführt und in einem abgekühlten, gereinigten Zustand durch den Kamin 3 an die Umgebung abgegeben werden.

Der aus dem Elektrolichtbogenofen 1 austretende Abgasstrom besitzt starke Schwankungen der Temperatur und des Volumenstromes. Für die erfindungsgemäße Nutzung des Abgasstromes ist ein im wesentlichen konstanter Volumenstrom und eine gleichmäßige Abgastemperatur erforderlich. Hierfür sind im Abgasstrom unmittelbar nach dem Elektrolichtbogenofen eine Nachverbrennungskammer 4 und eine Dampfeinspritzung 5 vorgesehen. Durch die Nachverbrennungskammer wird der Abgasstrom auf eine im wesentlichen vorbestimmte, konstante Temperatur gebracht, wogegen die Dampfeinspritzung eine Verringerung der Abgastemperatur und des Volumenstromes der Abgase herbeiführt. Durch den Dampfanteil im Abgasstrom steigt die nutzbare Energie. Durch diese Nachverbrennungskammer wird aber auch bereits eine Reinigung des Gases, z.B. von VOC-hältigen Verunreinigungen, durch thermische Verbrennung durchgeführt.

In Strömungsrichtung der Abgase nach der Brennerkammer 4 und der Dampfeinspritzung 5 befindet sich eine Staubabscheideeinrichtung 6, z. B. ein- oder mehrere Zyklone um eine Reduktion der Staubbeladung der Abgase durchzuführen, sodaß die Lebensdauer der dahinter angeordneten Einrichtungen nicht durch die Staubbeladung der Abgase beeinträchtigt wird.

In Strömungsrichtung der Abgase nach dem Zyklon 6 ist eine sogenannte inverse Gasturbine 7 angeordnet, welche mit den Abgasen bei einem gleichmäßigen Volumenstrom und einer gleichmäßigen Temperatur beschickt wird. Bei Eintritt in die Gasturbine befindet sich das Abgas (bis auf prozeßbedingte Druckverluste in der Größenordnung von ca. 10-100 mbar) im wesentlichen auf Umgebungsdruck, z. B. ca. 1 bar, und besitzt eine Temperatur von ca. 800°C. Bei dieser Temperatur müssen die Schaufeln der Turbine nicht gekühlt werden. In der Turbine wird das Abgas unter Freiwerden von Arbeit auf einen Unterdruck, z.B. 0,36 bar entspannt. Dabei sinkt die Temperatur etwa auf ca. 600°C.

An der Unterdruckseite der inversen Gasturbine 7 ist ein Verdampfer 8 angeordnet, in welchem die Abgase rasch auf eine niedrigere Temperatur, z. B. ca. 100°C abgekühlt werden. Dabei wird die Neubildung umweltschädlicher Gase, wie z. B. Dioxine oder VOC, bestmöglich vermieden.

In der Folge werden die gekühlten Abgase durch einen Kondensator 9 geführt, in welchem die Abgase kondensiert und so die durch die Staubabscheideeinrichtung 6 nicht abgeschiedenen feinen Staubteilchen ausgeschieden. Die Temperatur des Abgases sinkt dabei weiter ab, z. B. auf 30°C. Die durch Kondensation gewonnene Flüssigkeit kann, gegebenenfalls nach einer Reinigung, für die Dampfeinspritzung 5 verwendet werden, sodaß ein Wasser-Dampf-Kreislauf gebildet wird.

Die Abgase werden in ihrem abgekühlten, kondensierten Zustand einem in Strömungsrichtung nach dem Kondensator 9 angeordneten Verdichter 10 zugeführt, welcher die Abgase wieder auf Umgebungsdruck bringt. Bei Verdichtung der Abgase werden diese wieder erwärmt, etwa auf ca. 150°C. Somit kann der Wärmeinhalt der Abgase nach dem Verdichter 10 gegebenenfalls genutzt werden, z. B. für Vorwärmzwecke in dem metallurgischen Prozeß oder als Fernwärme. Zu diesem Zweck kann zwischen dem Verdichter 10 und dem Kamin 3 ein Wärmetauscher 11 vorgesehen werden.

Die Nutzung ausgekoppelter Wärme zu Vorwärmzwecken oder als Fernwärme ist gegebenenfalls auch bei der am Verdampfer 8 abgeführten Wärmemenge möglich.

Die an der Gasturbine 7 frei werdende Arbeit wird einerseits für den Betrieb des Verdichters 10 und andererseits durch einen Generator 12 zur Erzeugung elektrischer Energie genutzt. Zu diesem Zweck sind die inverse Gasturbine 7, der Verdichter 10 und der Generator 12 an einer gemeinsamen Welle W angeordnet.

Ein wesentlicher Vorteil beim Einsatz einer inversen Gasturbine 7 liegt darin, daß diese mit staubbeladenen Abgasen betrieben werden kann. Bei herkömmlichen FCC-Turbinen wird diesem Umstand durch konstruktive Maßnahmen Rechnung getragen, z. B. geringere Strömungsgeschwindigkeiten, größerer Abstand der Schaufelreihen oder dem Einsatz sogenannter Stolperkanten. Turbinen dieser Art sind bekannt und am Markt erhältlich. Ebenso besteht die Möglichkeit, für den erfindungsgemäßen Anwendungsfall besonders geeignete Gasturbinen anzufertigen. Eine Möglichkeit hiezu ist unter anderem in der Veröffentlichung mit dem Titel: 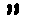 Industrial gas turbine with high rate particle flow 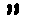 von H. Jericha, W. Sanz, and R. Pöschl, 1995 ASME Cogen-Turbo Power Conference, August 23-25, 1995, Wien, ausführlich beschrieben.

Zum Anfahren der erfindungsgemäßen Einrichtung muß aufgrund der Kopplung zwischen Turbine 7, Verdichter 10 und Generator 12 von außen Energie zugeführt werden. Dies kann beispielsweise mittels eines Hilfsmotors durchgeführt werden, welcher nach Anlaufen des Systems abgeschaltet bzw. ausgekoppelt wird.

Erste Berechnungen haben gezeigt, daß bei einem Elektrolichtbogenofen mittels der erfindungsgemäßen Einrichtung ca. 20 bis 25 Prozent der eingesetzten elektrischen Energie zurückgewonnen werden kann. Bei einem spezifischen elektrischen Energieverbrauch von ca. 320 KWh pro Tonne Stahl z. B. bei 100% Schrotteinsatz, und einer Tap-to-tap-Zeit von 60 Minuten ergibt sich eine elektrische Gesamtenergie von 32 MWh. Daraus können aus dem Primärabgasstrom ca. 8MW elektrische Leistung gewonnen werden.

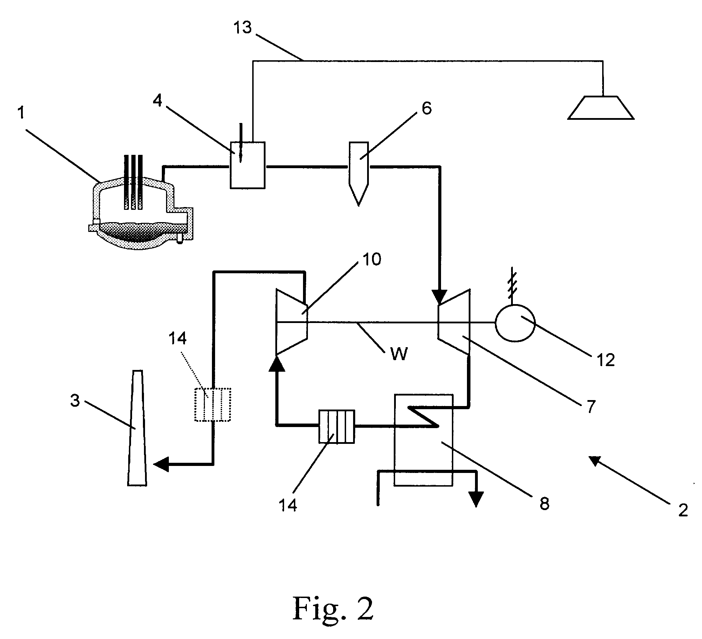

In Figur 2 ist eine alternative Ausführungsform für das in Figur 1 ausführlich beschriebene Ausführungsbeispiel der erfindungsgemäßen Vorrichtung dargestellt. Die in Figur 1 dargestellten und beschriebenen Bauteile werden in der folgenden Beschreibung mit denselben Bezugszeichen versehen und nicht näher beschrieben.

Bei der in Fig. 2 dargestellten Ausführungsform wird die Vergleichmäßigung des Abgasstromes unmittelbar nach dem Elektrolichtbogenofen 1 anstelle einer Dampfzuführung mittels einer Luftzuführung 13 durchgeführt. In diesem Fall wird auf eine Erhöhung der nutzbaren Energie aufgrund des Dampfanteiles weitgehend verzichtet, jedoch bietet diese Lösung den Vorteil, daß alle nachfolgenden Komponenten trocken, d. h. ohne Dampf- und Schlammanteile betrieben werden können und somit eine einfachere Konstruktion und eine höhere Lebensdauer zu erwarten ist.

Aufgrund des trockenen Betriebes der Gasturbine 7 und des Verdampfers 8 erübrigt sich nun auch ein Kondensator. Anstelle des Kondensators ist bei dem in Fig. 2 dargestellten Ausführungsbeispiel ein herkömmlicher Abgasfilter 14 vorgesehen.

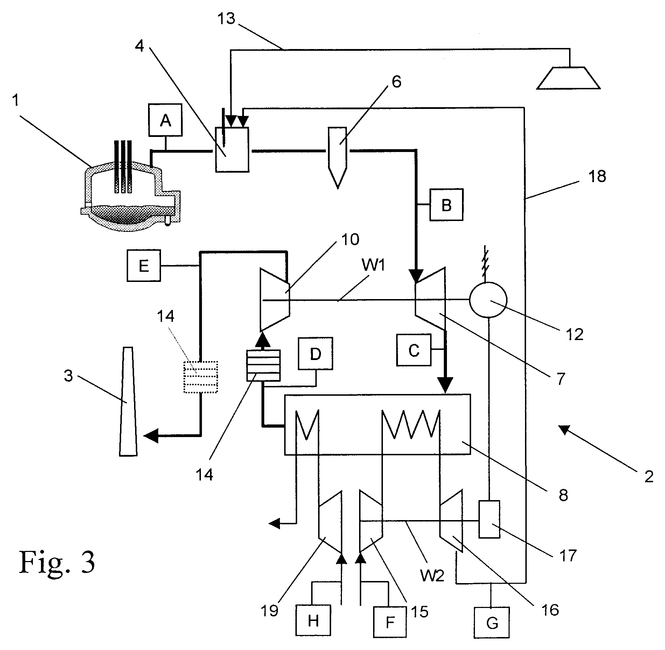

Eine Variante der in Figur 2 dargestellten Ausführungsform der erfindungsgemäßen Vorrichtung ist in Figur 3 dargestellt, wobei im folgenden lediglich auf die geänderten bzw. neu hinzugekommenen Merkmale Bezug genommen wird.

Zur Nutzung der in dem Wärmetauscher 8 abgeführten Energie ist dieser einerseits mit einem Verdichter 15 für Luft und andererseits mit einer konventionellen Heißluft-Gasturbine 16 verbunden. Der Verdichter 15 und die Gasturbine 16 sind auf einer gemeinsamen Welle W2 angeordnet, welche zur Erzeugung elektrischer Energie über ein Getriebe 17 mit dem Generator 12 verbunden ist. Die von dem Verdichter 15 angesaugte Luft wird komprimiert, in diesem komprimierten Zustand durch den Wärmetauscher 8 geführt, dabei erwärmt und in diesem Zustand der Gasturbine 16 zugeführt, wo die komprimierte erwärmte Luft unter Ausnutzung des Energieinhaltes entspannt und abgekühlt wird. Die niederdruckseitig an der Gasturbine 16 anfallende Luft ist im wesentlichen auf Umgebungsdruck und wird über eine Leitung 18 in die Nachverbrennungskammer 4 rückgeführt, wo diese als Verbrennungsluft genutzt werden kann.

Zur weiteren Abkühlung des Abgasstromes in dem Wärmetauscher 8 ist ein Ventilator 19 vorgesehen, mittels welchem Luft zur zusätzlichen Auskopplung von Wärme durch den Wärmetauscher geführt wird.

In Figur 3 sind weiters Referenzpunkte A bis H eingetragen, an welchen Verfahrensparameter für ein nicht einschränkendes Ausführungsbeispiel mit einem AC-Elektrolichtbogenofen für 100t Tapping-Gewicht und 100% Schrotteinsatz bestimmt wurden. Diese Parameter sind in der folgenden Tabelle zusammengefaßt, wobei mit T die Temperatur in °C, P der Druck in mbar bzw. bar und V der Volumenstrom in Nm³/h (Normqubikmeter pro Stunde) angegeben ist.

| **Referenzpunkt Nr.** | **T** | **P** | | **V** | **Gas** |
|---|---|---|---|---|---|
| | **°C** | **mbar** | **bar** | **Nm**^{**3**}**/h** | |
| A | 150-1700 | 1000 | | 20 000 - 35 000 | Brenngas* |
| B | 850 | 960 | | 250 000 | Rauchgas |
| C | 650 | 380 | | 250 000 | Rauchgas |
| D | 60 | 360 | | 250 000 | Rauchgas |
| E | 130 | 1010 | | 250 000 | Rauchgas |
| F | 25 | | 1 | 90 000 | Luft |
| G | 350 | | 1 | 90 000 | Luft |
| H | 25 | | 1 | 900 000 | Luft |

| | | | | | |
|---|---|---|---|---|---|
| *.....CO₂, H₂-hältig | | | | | |

Abschließend ist noch zu bemerken, daß die oben mit Bezug auf die Figuren Beschriebenen Ausführungsbeispiele nicht einschränkend sind, sondern daß zur Ausführung der Erfindung alle dem Fachmann bekannten Mittel und Kombinationen herangezogen werden können.

## Patentansprüche

1. Verfahren zur Nutzung von Wärme aus Abgasen metallurgischer Prozesse, insbesondere aus Abgasen eines Elektrolichtbogenofens, **dadurch gekennzeichnet, daß** die heißen Abgase im wesentlichen bei Umgebungsdruck einer inversen Gasturbine zugeführt, in dieser auf einen geringeren Druck expandiert, abgekühlt und nachfolgend in einem Verdichter komprimiert werden, wobei durch Kopplung der inversen Gasturbine mit einem Generator elektrische Energie erzeugt wird.

2. Verfahren nach Anspruch 1, **dadurch gekennzeichnet, daß** der Abgasstrom vor Zuführung in die inverse Gasturbine hinsichtlich Menge und Temperatur innerhalb eines zulässigen Wertebereichs im wesentlichen konstant gehalten wird.

3. Verfahren nach Anspruch 2, **dadurch gekennzeichnet, daß** bei Konstanthaltung der Temperatur eine Reduktion der gasförmigen Schadstoffkomponenten im Abgas durch thermische und/oder katalytische Nachverbrennung durchgeführt wird.

4. Verfahren nach Anspruch 1, **dadurch gekennzeichnet,** daß der Abgasstrom vor Zuführung in die inverse Gasturbine, bis auf eine maximal zulässige Staubbeladung, von Grob- und Feinstaubanteilen gereinigt wird.

5. Verfahren nach Anspruch 1 bis 4, **dadurch gekennzeichnet, daß** der Abgasstrom nach Durchströmen der inversen Gasturbine in einem Wärmetauscher weiter abgekühlt wird.

6. Verfahren nach Anspruch 5, **dadurch gekennzeichnet, daß** durch den Wärmetauscher ein komprimiertes gasförmiges Medium, vorzugsweise Luft, geführt, dabei erwärmt und einer konventionellen Gasturbine zugeführt wird, in welcher das gasförmige Medium abgekühlt und im wesentlichen auf Umgebungsdruck expandiert wird, wobei durch Kopplung der Gasturbine mit einem Generator elektrische Energie erzeugt wird.

7. Verfahren nach Anspruch 2 und Anspruch 6, **dadurch gekennzeichnet, daß** das expandierte abgekühlte gasförmige Medium, vorzugsweise Luft, als vorgewärmte Verbrennungsluft energetisch genutzt wird und diese Energie dem Abgasstrom vor der inversen Gastrubine zugeführt wird.

8. Verfahren nach Anspruch 5, 6 oder 7, **dadurch gekennzeichnet, daß** der Abgasstrom nach Durchströmen des Wärmetauschers in einem Verdichter wieder auf Umgebungsdruck komprimiert und an die Umgebung abgegeben wird.

9. Verfahren nach Anspruch 8, **dadurch gekennzeichnet, daß** der Abgasstrom vor oder nach dessen Komprimierung durch den Verdichter entstaubt wird.

10. Verfahren nach Anspruch 8, **dadurch gekennzeichnet, daß** der Abgasstrom nach dessen Komprimierung durch den Verdichter zur Auskopplung von Restwärme durch einen weiteren Wärmetauscher geführt wird.

11. Verfahren nach einem der vorigen Ansprüche, **dadurch gekennzeichnet, daß** der Abgasstrom der inversen Gasturbine mit einer Temperatur von ca. 700 - 900 °C insbesondere 750-850°C zugeführt und in der inversen Gasturbine auf eine Temperatur von 500-650°C abgekühlt wird.

12. Verfahren nach Anspruch 11, **dadurch gekennzeichnet, daß** der Abgasstrom der inversen Gasturbine unter Atmosphärendruck abzüglich der prozeßbedingten Druckverluste zugeführt und in der inversen Gasturbine auf einen Druck von ca. 0,2 - 0,4 bar expandiert wird.

13. Verfahren nach Anspruch 11 und 12, **dadurch gekennzeichnet, daß** der Abgasstrom nach Durchströmen der inversen Gasturbine in einem Wärmetauscher, z.B. ein Einspritzkühler, rasch auf eine Temperatur von ca. 50 - 250°C abgekühlt wird.

14. Verfahren nach Anspruch 13, **dadurch gekennzeichnet, daß** der Abgasstrom bei Überschreiten des Wassertaupunktes auf eine Temperatur von über 100°C gekühlt wird.

15. Verfahren nach Anspruch 13, **dadurch gekennzeichnet, daß** der Abgasstrom zumindest bis unter den Wassertaupunkt abgekühlt wird.

16. Vorrichtung zur Nutzung von Wärme aus Abgasen metallurgischer Prozesse, insbesondere aus Abgasen eines Elektrolichtbogenofens, **dadurch gekennzeichnet, daß** sie eine inverse Gasturbine (7), die mit einem Generator (12) zur Erzeugung elektrischer Energie gekoppelt ist, eine nachgeordnete Einrichtung (8) zum Abkühlen und eine dieser nachgeordnete Einrichtung (10) zum Verdichten der Abgase aufweist.

17. Vorrichtung nach Anspruch 16, **dadurch gekennzeichnet, daß** vor der inversen Gasturbine (7) ein Mittel (4, 5, 13, 18) zur Vergleichmäßigung des Abgasstroms hinsichtlich Menge und Temperatur vorgesehen ist.

18. Vorrichtung nach Anspruch 16 oder 17, **dadurch gekennzeichnet, daß** vor der inversen Gasturbine (7) ein Mittel (6) zum Entstauben der Abgase, z.B. ein oder mehrere Zyklone, vorgesehen ist.

19. Vorrichtung nach Anspruch 16, 17 oder 18, **dadurch gekennzeichnet, daß** die nach der inversen Gasturbine (7) angeordnete Einrichtung (8) zum raschen Abkühlen ein Wärmetauscher oder Einspritzkühler ist.

20. Vorrichtung nach Anspruch 19, **dadurch gekennzeichnet, daß** die Einrichtung (10) zum Verdichten der Abgase ein mit der inversen Gasturbine (7) über eine gemeinsame Welle (W) gekoppelter Verdichter ist.

21. Vorrichtung nach Anspruch 14 oder 18, **dadurch gekennzeichnet, daß** die inverse Gasturbine (7) über die gemeinsame Welle (W) mit dem Generator (12) verbunden ist.

22. Vorrichtung nach Anspruch 15, **dadurch gekennzeichnet, daß** das Mittel (4, 5, 13) zur Vergleichmäßigung des Abgasstromes eine Nachverbrennungskammer (4) aufweist.

23. Vorrichtung nach Anspruch 15 oder 20, **dadurch gekennzeichnet, daß** das Mittel (4, 5) zur Vergleichmäßigung des Abgasstroms einen Einspritzkühler aufweist.

24. Vorrichtung nach Anspruch 15 oder 20, **dadurch gekennzeichnet, daß** das Mittel (4, 13) zur Vergleichmäßigung des Abgasstroms eine Luft-Zuführung aufweist.

25. Vorrichtung nach Anspruch 19, bei welcher zur Abkühlung des Abgasstromes ein Wärmetauscher vorgesehen ist, **dadurch gekennzeichnet, daß** der Wärmetauscher (8) einerseits zur Zuführung eines komprimierten gasförmigen Medium, vorzugsweise Luft, mit einem Verdichter (15) und andererseits mit einer konventionellen Gasturbine (16) verbunden ist, welche zur Erzeugung elektrischer Energie mit dem Generator (12) verbunden ist.

26. Vorrichtung nach Anspruch 25, **dadurch gekennzeichnet, daß** die Gasturbine (16) und der Verdichter (15) auf einer gemeinsamen Welle (W2) angeordnet und über ein Getriebe (17) mit dem Generator (12) verbunden sind.

27. Vorrichtung nach Anspruch 24 und einem der Ansprüche 25 oder 26, **dadurch gekennzeichnet, daß** die Gasturbine (16) niederdruckseitig mit der Nachverbrennungskammer (4) verbunden ist.

28. Vorrichtung nach Anspruch 19, **dadurch gekennzeichnet, daß** der Wärmetauscher (8) zusätzlich einen Ventilator (19) zur Auskopplung von Wärmeenergie mittels atmosphärischer Kühlluft aufweist.

29. Vorrichtung nach Anspruch 16, **dadurch gekennzeichnet, daß** zwischen der Einrichtung (8) zum Abkühlen und der Einrichtung (10) zum Verdichten eine Einrichtung (9, 14a) zum Entstauben des Abgasstromes, insbesondere ein Kondensator-Wäscher oder ein Trocken-Filter angeordnet ist.

30. Vorrichtung nach Anspruch 16, **dadurch gekennzeichnet, daß** nach der Einrichtung zum Verdichten (10) eine Einrichtung zum Entstauben des Abgasstromes (14b) angeordnet ist.
